(19) Europäisches Patentamt
European Patent Office
Office européen des brevets

(11) **EP 3 743 561 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **19701953.2**

(22) Anmeldetag: **17.01.2019**

(51) Internationale Patentklassifikation (IPC):
*E01B 35/00* (2006.01)      *E01B 27/20* (2006.01)
*E01B 27/17* (2006.01)      *B61K 9/08* (2006.01)

(52) Gemeinsame Patentklassifikation (CPC):
**E01B 35/00; E01B 27/17;** B61K 9/08

(86) Internationale Anmeldenummer:
**PCT/AT2019/050005**

(87) Internationale Veröffentlichungsnummer:
**WO 2019/140467 (25.07.2019 Gazette 2019/30)**

(54) **VERFAHREN ZUR GLEISLAGEVERBESSERUNG DURCH EINE GLEISFAHRBARE GLEISSTOPFMASCHINE**

METHOD FOR TRACK POSITION IMPROVEMENT BY MEANS OF A TRACK-MOVABLE TRACK-TAMPING MACHINE

PROCÉDÉ D'AMÉLIORATION DE LA POSITION D'UNE VOIE FERRÉE PAR UNE MACHINE DE BOURRAGE DE VOIES POUVANT CIRCULER SUR DES VOIES FERRÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2018 AT 500512018**

(43) Veröffentlichungstag der Anmeldung:
**02.12.2020 Patentblatt 2020/49**

(73) Patentinhaber: **HP3 Real GmbH**
**1130 Wien (AT)**

(72) Erfinder: **LICHTBERGER, Bernhard**
**1030 Wien (AT)**

(74) Vertreter: **Hübscher & Partner Patentanwälte GmbH**
**Spittelwiese 4**
**4020 Linz (AT)**

(56) Entgegenhaltungen:
**EP-A1- 0 952 254      EP-A1- 2 957 674**
**WO-A1-2008/125168      DE-B4- 10 337 976**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung bezieht sich auf ein Verfahren zur Gleislageverbesserung durch eine gleisfahrbare Gleisstopfmaschine, die mit einem Dreipunktarbeitsmesssystem mit drei Messwagen und einer dazwischen gespannten Sehne, mit einer Stopfeinheit, mit einem Hebe-Richt-Aggregat für Gleise und insbesondere mit einem Odometer ausgestattet ist, wobei die Lage des Gleises nach der Berichtigungsarbeit der Gleisstopfmaschine mit einem Messsystem aufgezeichnet wird, und wobei ein Rechner die Differenz zwischen einer vorgegebenen Gleissolllage und einer mit dem Messsystem aufgezeichneten Istlage, einen Restfehler, errechnet.

Stand der Technik

Die meisten Gleise für die Eisenbahn sind als Schotteroberbau ausgeführt. Die Schwellen liegen dabei im Schotter. Durch die wirkenden Radkräfte der darüberfahrenden Züge werden unregelmäßige Setzungen im Schotter und Verschiebungen der seitlichen Lagegeometrie des Gleises hervorgerufen. Durch die Setzungen des Schotterbettes treten Fehler in der Längshöhe, der Überhöhung (im Bogen) und der Richtlage auf. Werden bestimmte Komfortgrenzwerte oder Sicherheitsgrenzwerte dieser geometrischen Größen überschritten, dann werden Instandhaltungsarbeiten durchgeführt. Eine Gleisstopfmaschine verbessert die Gleisgeometrie, die durch die Belastung der Züge verschlechtert wurde. Dazu wird das Gleis mittels elektrohydraulisch gesteuerten Hebe- Richteinrichtungen in die Gleissollposition gehoben und gerichtet und in dieser Lage durch Verdichten (Stopfen) des Schotters unter den Schwellen fixiert (Lichtberger, Bernhard: Das Handbuch Gleis, Tetzlaff Verlag, Hamburg, ISBN 978-3-7771-0400-3 3. Auflage 2010).

Zur Führung der Berichtigungswerkzeuge der Oberbaumaschine werden überwiegend Mess- und Steuerungssysteme nach dem Dreipunkt-Verfahren eingesetzt. Die Praxis zeigt, dass die Gleislagen zwar verbessert, aber die theoretisch möglichen Verbesserungen bei Weitem nicht erreicht werden. Die Gleislagefehler werden typischerweise nur zwischen 30-50% verringert. Die Form und Lage der Gleislagefehler bleibt dabei meist erhalten, nur die Amplituden der Fehler verringern sich.

Damit das Gleis nach derartigen Gleisgeometrieverbesserungsarbeiten wieder für den Zugsbetrieb frei gegeben werden kann, sind die Eisenbahnoberbaumaschinen mit so genannten Abnahmemessanlagen und einem Abnahmeschreiber ausgestattet. Mit diesem Abnahmeschreiber werden die verbleibenden Fehler aufgezeichnet. Für die Freigabe sind dazu vorgegebene Toleranzen der Gleislagefehler zu unterschreiten.

Je kleiner die Restfehler nach einer Instandhaltungsarbeit sind, desto geringer sind die wechselwirkenden Kräfte zwischen Rad und Schiene durch die Züge, desto langsamer verschlechtert sich die Gleisgeometrie wieder und umso länger die Dauerhaftigkeit der Gleislage. Es ist daher wünschenswert, die Gleisgeometrie möglichst an die Soll-Lage heranzuführen, weil damit anschließend erhebliche Kosten und Aufwand gespart werden können.

Zur Berichtigung von Gleisfehlern haben sich verschiedene Gleisrichtverfahren herausgebildet. Einerseits gibt es Relativverfahren die die Gleislage nur glätten und andererseits Absolutverfahren. Letztere haben sich bei den modernen Bahnen weitgehend durchgesetzt. Bei den Absolutverfahren werden die Gleislagen nach vorgegebenen Sollgeometrien berichtigt. Die Sollgeometrien der Eisenbahngleise stehen als Gleislagepläne zur Verfügung und können nach Eingabe in einen Recher der Oberbaumaschine zur Berechnung der systematischen Fehler unter Kenntnis des Verhaltens der Messsysteme genutzt werden. Sind die absoluten Korrekturwerte für das vordere Ende der Maschinenmesseinrichtung bekannt, dann wird das vordere Ende der Maschinenmesseinrichtung auf der Gleis-Sollgeometrie geführt und das hintere Ende auf dem bereits berichtigten Gleis. An der Arbeitsstelle wird der Richt- und Hebevorgang durchgeführt. Die Position der Stopfmaschine in der Gleislängsachse wird mit einem Odometer bestimmt. Dieses Verfahren wird als Dreipunkt-Verfahren bezeichnet.

Nachteilig bei der derzeitigen Anwendung des Dreipunktverfahrens ist die entgegen der theoretisch erwartbaren Verbesserung der Gleislage die nicht zufrieden stellende Reduktion der Gleislagefehler um nur etwa 30-50%. Mit dieser mangelhaften Funktion des Dreipunktverfahrens wird das Aufwands- und Kosteneinsparungspotential welches sich durch eine bessere Anwendung ergeben würde nicht ausgeschöpft. Der Grund dieser mangelhaften Funktion ist darin zu suchen, dass das hintere Sehnenende nicht exakt auf der Gleis-Sollgeometrie geführt wird, sondern Restfehler aufweist die ins System zurückgekoppelt werden. Diese Fehler entstehen durch unregelmäßige Setzungen des Gleises nach dem Heben und durch Rückfedern des Gleises nach dem Richten, sowie durch die Rückkopplung dieser Fehler in den Regelkreis. Die entstehenden Setzungen hängen von der Schotterhöhe und dem Schotterzustand ab, das Rückfedern des Gleises von den Richtkräften, den Eigenschaften der Schienenbefestigung und dem Verhalten des Gleises selbst. Das endlos verschweißte Gleis weist bei hohen Schienentemperaturen (etwa ab T>20°C) eine Druckspannung und bei niedrigen Temperaturen (etwa ab T<20°C) eine Zugspannung auf. Nach dem Richten kann es also auf Grund dieser inneren Spannungen zu einem Rück- oder Ausfedern des Gleises kommen.

Bei Arbeitsbeginn und Arbeitsende mit einer Oberbaumaschine dürfen nicht sprunghaft Hebungen oder Berichtigungen der Seitenlage durchgeführt oder liegen gelassen werden, sondern die Werte müssen sukzessive aufgebaut bzw. abgebaut werden (an- und abrampen). Dadurch wird allerdings in diesen Übergangsstücken der reale Gleisfehler nur teilweise behoben. Während und nach dem Aufbau der Rampe kann davon ausgegangen werden, dass sich das hintere Sehnenende auf einem fehlerhaften Gleis befindet. Das An- und Abrampen durch den Maschinenbediener erfolgt intuitiv und erfahrungsbasiert und ist im Ergebnis nicht wirklich vorhersagbar und objektiv beurteilbar.

Über den Abnahmemessschrieb erkennt der Bediener der Maschine, die Größenordnung der Fehler die zurückbleiben. Mittels einstellbarer Korrekturwerte versucht er sich aufschwingenden Fehlern entgegenzuwirken. Da aber zwischen Arbeitsposition und Abnahmemessposition ungefähr 10-15m liegen, kann das dazwischenliegende bereits bearbeitete Gleis nicht mehr beeinflusst werden. Die Korrekturen des Bedieners stellen so zu sagen eine Vorhersage des Bedieners dar wie sich der Fehler entwickeln wird. Dabei ist er auf seine Intuition und Erfahrung angewiesen.

Aus der EP 0 952 254 A1 ist es bekannt, ein Gleis, nachdem mit einer Gleisstopfmaschine unter Anheben in einer vorläufigen Soll-Lage mit einem Stopfaggregat unterstopft und damit fixiert ist, nachfolgend im Rahmen einer Gleisstabilisation durch Aufbringen einer statischen Auflast in Verbindung mit Querschwingungen kontrolliert mit einem Gleisstabilisator in eine endgültige Soll-Lage abzusenken. Um dabei ein grösser werden von Restfehler im Laufe des Arbeitseinsatzes der Maschine zu einer immer grösser werdenden negativen Beeinflussung der hinteren Abtaststelle zu vermeiden, wurde gemäß der Lehre der WO 2008125168 A1 vorgeschlagen das hintere Sehnenende rechnerisch entlang einer Ausgleichsgeraden zu führen.

Darstellung der Erfindung

Der Erfindung liegt somit die Aufgabe zugrunde ein Verfahren anzugeben welches die Wirkung des Dreipunktverfahrens so verbessert, dass eine Reduktion der Gleislagefehler mit mehr als nur 30-50% möglich ist. Intuitive und erfahrungsbasierte Einstellungen von Korrekturwerten durch den Bediener und die damit verbundene Fehleranfälligkeit sollen vermieden werden. Das An- und Abrampen bei Arbeitsbeginn und Arbeitsende soll in Weiterer Folge automatisch derart erfolgen können, dass das hintere Sehnenende gezielt auf der Soll-Lage geführt wird, um Rückkopplungen in den Regelkreis zu unterbinden.

Die Erfindung löst die gestellte Aufgabe dadurch, dass solllagedie Lage des hinteren Sehnenendes am Messwagen des Dreipunktarbeitsmesssystems fortwährend derart berichtigt wird, dass das hintere Sehnenende am hinteren Messwagen der Gleisstopfmaschine auf der Gleissolllage geführt wird.

Das hintere Sehnenende am hinteren Messwagen der Gleisstopfmaschine wird rechnerisch und elektronisch, also virtuell, auf der Gleis-Solllage geführt und nicht wie bisher üblich auf den verbleibenden Restfehlern am hinteren Messwagen. Dadurch, dass bei der bisherigen Anwendung des Dreipunktverfahrens zwar der vordere Sehnenpunkt elektronisch auf der Gleis-Solllage geführt werden kann, nicht aber der hintere Sehnenpunkt auf den zurückbleibenden Gleisfehlern, ergibt sich ein rückgekoppeltes System. Der hintere Sehnenpunkt läuft auf den Gleisfehlern und beeinflusst so das Berichtigungsergebnis nachteilig. Deswegen wird Lage des Gleises nach der Berichtigungsarbeit der Stopfmaschine, wie im nächsten Absatz skizziert gemessen und diese mit dem Messsystem aufgezeichnete Istlage verwendet um den Restfehler zu errechnen. Die Lage des hinteren Sehnenendes am Messwagen des Dreipunktarbeitsmesssystems wird dann fortwährend derart berichtigt, dass das hintere Sehnenende am hinteren Messwagen der Gleisstopfmaschine auf der Gleissolllage geführt wird.

Dem (hinteren) Messwagen der Gleisstopfmaschine ist vorzugsweise ein Inertialmesssystem zugeordnet, das die Lage des Gleises nach der Berichtigungsarbeit der Stopfmaschine aufzeichnet. Die Ermittlung der Restfehler des Gleises nach der Stopfarbeit könnte aber auch alternativ oder zusätzlich durch Extrapolation aus den Messungen eines nachfolgenden Abnahmedreipunktmesssystems mit drei Meßwagen und einer dazwischen gespannten Sehne erfolgen.

Die Erfindung löst das vollautomatische An- und Abrampen dadurch, dass die Lage des hinteren Sehnenendes am hinteren Messwagen der Stopfmaschine zum Bilden einer Anfangsrampe automatisch aus einer Nullberichtigung bei Arbeitsbeginn derart zur Gleissolllage hin geführt wird, dass die notwendigen Gleiskorrekturen kontinuierlich aufgebaut werden und dass die Lage des Sehnenendes am vorderen Messwagen der Stopfmaschine zum Bilden einer Endrampe derart automatisch aus der Gleissolllage zu einer Nullberichtigung bei Arbeitsende geführt wird, dass die notwendigen Gleiskorrekturen kontinuierlich abgebaut werden.

Das hintere Sehnenende wird über eine gerechnete Rampe auf die Soll-Position des Gleises führt. Vorzugsweise wird auf den Messwagen des hinteren Sehnenendes ein Inertialmesssystem aufgebaut welches die Restfehler misst. Mit Hilfe dieser erfindungsgemäß so ermittelten Messfehler wird die Lage des hinteren Sehnenendes korrigiert und auf der Gleis-Solllage geführt. Damit werden die Rückkopplung und die dadurch entstehenden Gleislagefehler des Systems vermieden.

Das Inertialmesssystem wird auf einen Messwagen mit zwei Radsätzen die zueinander drehbar ausgeführt sind aufgebaut. Mit dem Messwagen wird ein Odometer verbunden welches die Distanz die der Messwagen auf dem Gleis zurücklegt misst. Der Messwagen wird während der Messung seitlich an die Referenzschiene angepresst. Das Inertialmesssystem misst die Tangente der Gleisrichtung und der Längsneigung so wie die Querneigung des Messwagens auf dem Gleis (die Überhöhung). In z.B. äquidistanten Schritten (typisch sind 0,25; 0,5 oder 1m - auch eine quasikontinuierliche Aufzeichnung ist wegen der hohen Messraten des Inertialmesssystems möglich) werden die Messdaten des Inertialmesssystems an einer entsprechenden Stelle abgespeichert. Zu jedem Messpunkt wird außer den Daten des Inertialmesssystems auch die exakte, zurückgelegte Bogenlänge (oder der "Gleiskilometer") abgespeichert.

Während der Arbeit wird die Spur des Messwagens im Raum aus den Absolutwinkeldifferenzen zum nordbasierten Koordinatensystem der aufgezeichneten Werte des Inertialmesssystems für jeden Messpunkt (Roll-, Gier-und Nickwinkel) berechnet. Die Differenzen dieser gemessenen Ist-Gleislagespur mit der Soll-Gleislagespur ergibt die absoluten Gleislagefehler.

An Stelle des Inertialmesssystems können die Restfehler aber auch aus den Messwerten einer nachlaufenden Dreipunktabnahmesehne errechnet werden. Mittels digitaler Filter kann eine genäherte inverse Übertragungsfunktion der Sehnenmessung gebildet (siehe z.B. DE 103 37 976 B4) auf die Messwerte angewendet und so auf den tatsächlichen Fehlerverlauf zurückgerechnet werden. Aus dem Verlauf dieses Fehlerverlaufes wird dann auf den Gleisfehler extrapoliert und so der Restfehler am hinteren Ende der Arbeitsmesssehne am hinteren Messwagen ermittelt. Die Extrapolation kann z.B. über eine Sinusfunktion oder ein Polynom höherer Ordnung nach der Methode der kleinsten Quadrate errechnet erfolgen.

Die Vorteile der Erfindung liegen in der verbesserten Gleis-Lage und der damit gegebenen längeren Haltbarkeit derselben. Damit kann der Zyklus zwischen notwendigen Instandhaltungsarbeiten wesentlich verlängert werden, was erhebliche Kosten spart. Zum anderen ist als Vorteil zu nennen, dass der Bediener durch das automatische An- und Abrampen sowie den Entfall der Korrektureingabe während der Arbeit erheblich entlastet wird. Ein weiterer Vorteil ist die damit garantierte automatisch erzielte höhere Gleislagequalität und der Entfall des menschlichen Fehlerfaktors.

Kurze Beschreibung der Erfindung

In der Zeichnung ist der Erfindungsgegenstand beispielhaft schematisch dargestellt. Es zeigen

Fig. 1 Schematische Seitenansicht einer Gleisstopfmaschine,

Fig. 2 Diagramme die die Situation bei einem bekannten Dreipunktnachmesssystem und dem erfindungsgemäßen System mit INS-Einheit zeigen,

Fig. 3 Darstellung des Dreipunktverfahrens im Idealfall eines nicht zurückbleibenden Gleislagefehlers,

Fig. 4 Darstellung des Dreipunktverfahrens bei einem zurückbleibenden Gleislagefehler mit Rückkopplung ins System,

Fig. 5 Typischer Verlauf von Gleislagefehlern vor und nach der Berichtigung durch eine Gleisstopfmaschine,

Fig. 6 Schematische Darstellung zur Beschreibung der automatisch gesteuerten Anfangsrampe,

Fig. 7 Schematische Darstellung zur Beschreibung der automatisch gesteuerten Endrampe.

Wege zur Ausführung der Erfindung

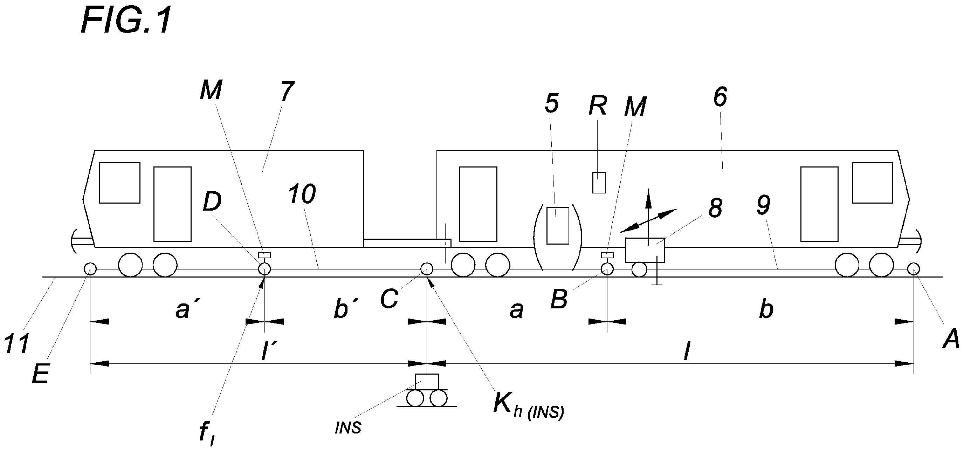

Fig. 1 zeigt eine Gleisstopfmaschine zur Durchführung eines erfindungsgemäßen Verfahrens. An die Gleisstopfmaschine 6 ist ein Anhänger 7 gekuppelt. Die Gleisstopfmaschine 6 ist mit einer Stopfeinheit 5 ausgestattet. Mit einem Hebe-Richt-Aggregat 8 wird ein hinsichtlich seiner Lage in einem Schotterbett zu berichtigendes Gleis 11 in die Soll-Gleisposition gehoben und gerichtet. Unter der Gleisstopfmaschine 6 ist ein Dreipunktarbeitsmesssystem mit drei Messwagen A, B, C und einer dazwischen gespannte Sehne 9, z. B. einer Stahlsehne, vorgesehen. Beim Messwagen B misst ein Sensor M die Auslenkung der Sehne 9 in Höhen- und Seitenrichtung. Die Sehne 9 hat die Länge I und ist in die Sehnenabschnitte a und b unterteilt, zwischen denen der Messwagen B angeordnet ist.

Zur Abnahmemessung kann am Anhänger 7 eine Abnahmesehne 10 zwischen Messwagen E und C gespannt sein. Beim Messwagen D wird wiederum mittels Sensor M die Auslenkung in Höhe und Richtung gemessen. Die Länge der Abnahmemesssehne ist l' und diese hat die Sehnenabschnitte a' und b'. $f_l$ zeigt den Restfehler an der Position des Messwagens D bei Messung mit der zwischen Messwagen E und C gespannten Abnahmesehne 10. In diesem Fall muss, da der absolute Restfehler nicht direkt gemessen werden kann, die Ermittlung der Restfehler des Gleises $K_h$ nach der Stopfarbeit durch Extrapolation aus den Messungen erfolgen.

Bei der bevorzugten erfindungsgemäßen Ausführung mit Inertialmesssystem INS entfallen die Messwagen E und D. Das Inertialmesssystem INS zeichnet die Lage des Gleises nach der Berichtigungsarbeit der Stopfmaschine auf. An Stelle des Messwagens C (mit einer Achse) wird ein 4-rädriger INS-Messwagen INS aufgebaut. $K_h$ steht allgemein für den ermittelten Restfehler. $K_{h(INS)}$ steht für den mit dem Inertialmesssystem INS ermittelten Restfehler.

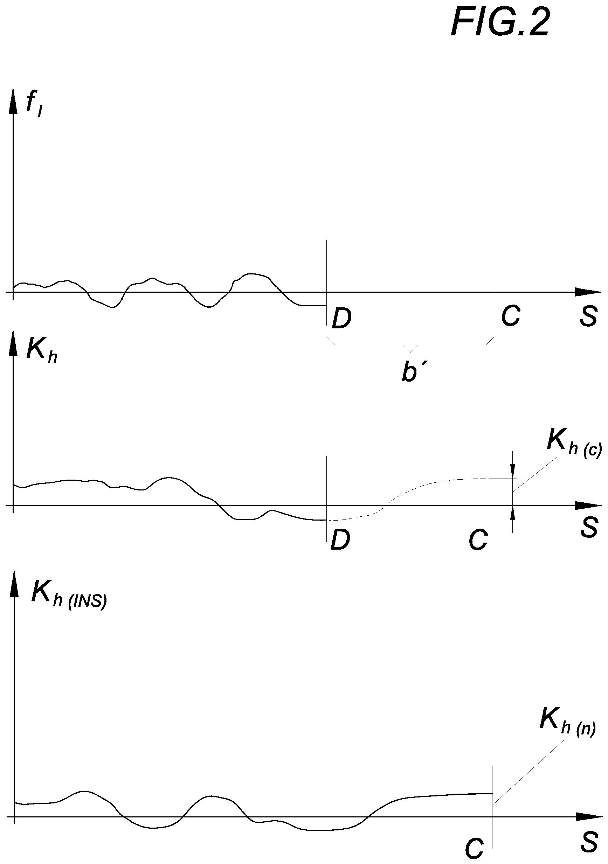

Fig. 2 zeigt im oberen Diagramm schematisch den gemessenen Restfehler $f_l$ abhängig von der Bogenlänge s bei Ausführungen von Abnahmemesssystemen mit Dreipunktsehne, also den Messwagen C, D, E. Die Sehne 10 ist dabei zwischen den Messwagen E und C gespannt. Während der Arbeit der entlang des Gleises verfahrenden Gleisstopfmaschine (6) wird also der jeweils zuletzt gemessene Restfehler am Messwagen D gemessen. Das heißt zwischen dem hinteren Sehnenende am Messwagen C und dem gemessenen Restfehler am Messwagen D liegt eine Distanz der Länge b'. Dies sind im Regelfall zwischen 5-8 m, je nach Ausführung der Messsysteme. Das heißt, dass zwischen dem am Messwagen D aufgezeichneten Restfehler, der am Abnahmeschreiber gezeigt wird, und dem aktuellen Restfehler am Messwagen C eine noch nicht aufgezeichnete, aber bereits fehlerhaft liegende, Strecke der Länge b' liegt. Will der Bediener den wirklichen Restfehler bei Messwagen C korrigieren, dann muss er dessen vermutliche Größe aus der aufgezeichneten Fehlerform extrapolieren. Das ist schwierig und die Genauigkeit der Korrektur hängt von der Erfahrung und Intuition des Bedieners ab.

Im mittleren Diagramm von Fig. 2 wird dies durch die strichlierte Linie zwischen Messwagen D und C angedeutet. Diese strichlierte Linie extrapoliert der Bediener aus dem vergangenen Kurvenverlauf hinein und korrigiert die Position des hinteren Sehnenendes am Messwagen C mit dem angenommenen Korrekturwert $K_{h(C)}$.

Das untere Diagramm in Fig. 2 zeigt die Verhältnisse bei der erfindungsgemäßen Ausführung mit einem Inertialmesssystem INS. Ein Rechner (R) errechnet einen Restfehler ($K_h$) aus der Differenz zwischen einer vorgegebenen Gleissolllage (1) und einer mit dem Messsystem aufgezeichneten Istlage und berichtigt die Lage des hinteren Sehnenendes am Messwagen C des Dreipunktarbeitsmesssystems fortwährend derart, dass das hintere Sehnenende am Messwagen C auf der Gleissolllage 1 geführt wird. Ist das Inertialmesssystem INS am hinteren Messwagen C des Dreipunktarbeitsmesssystems der Gleisstopfmaschine 6 mit den Messwagen A, B und C aufgebaut, kann der Restfehler durch Vergleich der Inertialmesssystem-Messungen mit der Gleis-Solllage 1 direkt ermittelt werden. Die Lage des hinteren Sehnenendes am Messwagen C kann damit durch den Korrekturwert $K_{h(n)}$ direkt auf der Gleis-Solllage 1 geführt werden. Die Führung der Lage des hinteren Sehnenendes am Messwagen C auf der Gleis-Solllage 1 erfolgt dabei vorzugsweise im Rechner R virtuell, könnte aber auch am Messwagen C mittels eines geeigneten Aktuators direkt mechanisch erfolgen.

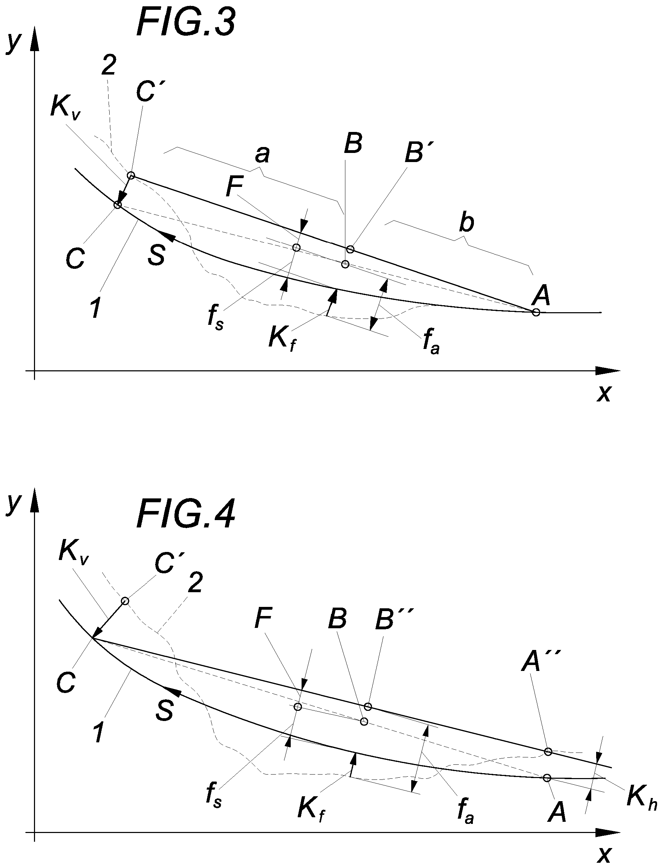

Fig. 3 zeigt schematisch die ideale Funktionsweise eines Drei-Punkt-Messsystems. Skizziert sind die Gleis-Solllage 1 und die fehlerhafte Gleis-Istlage 2. Mittels einer Vormessung wurden die Abweichungen $K_v$ zwischen der Solllage und der Istlage ermittelt und dem Rechner R der Gleisstopfmaschine 6 übergeben. Dadurch kann der Rechner R das eine Sehnenende durch Kompensationsrechnung virtuell auf der Gleis-Solllage am Messwagen C führen. Real befindet sich der Sehnenpunkt allerdings auf dem fehlerhaften Istgleis Punkt C'. Das andere Sehnenende am Messwagen A befindet sich auf dem bereits berichtigten, hier ideal dargestellt, im fehlerlosen Gleis 1. Aus der bekannten Gleis-Sollgeometrie errechnet der Rechner R die Gleis-Sollpfeilhöhe $f_s$ (für die Querrichtung des Gleises) bzw. Gleis-Solllängshöhe (für die Hebung des Gleises). $f_a$ ist die gemessene Pfeil- bzw. Längshöhe. Das Hebe-Richt-Aggregat 8 der Maschine korrigiert nun das Gleis so, dass die gemessene Ist-Pfeilhöhe $f_a$ bzw. Ist-Längshöhe dem errechneten Sollwerten $f_s$ entspricht und dabei auf Gleis-Solllage 1 gebracht wird. Das Gleis wird also um den Wert $K_f$ korrigiert. Theoretisch arbeitet das System fehlerfrei.

Fig. 4 zeigt die reale Funktionsweise eines Dreipunktarbeitsmesssystem schematisch. Im Gegensatz aber zum idealen System (Fig. 3) befindet sich das hintere Sehnenende am Messwagen A nicht auf der Gleis-Solllage 1, sondern läuft um den Restfehler $K_h$ (Punkt A") nach. Wegen diese fehlerhafte Lage der Sehne an den Messwagen A", B", C erfolgt eine fehlerhafte Berichtigung der Gleislage. Somit bleibt an der Hebe-Richt-Stelle bzw. am Messwagen B, B" ein Restfehler F zurück da durch den Restfehler $K_h$ hinten eine zu große Ist-Pfeilhöhe bzw. Ist-Längshöhe bestimmt wird. Eben diese Fehler werden mit dem erfindungsgemäßen Verfahren vermieden.

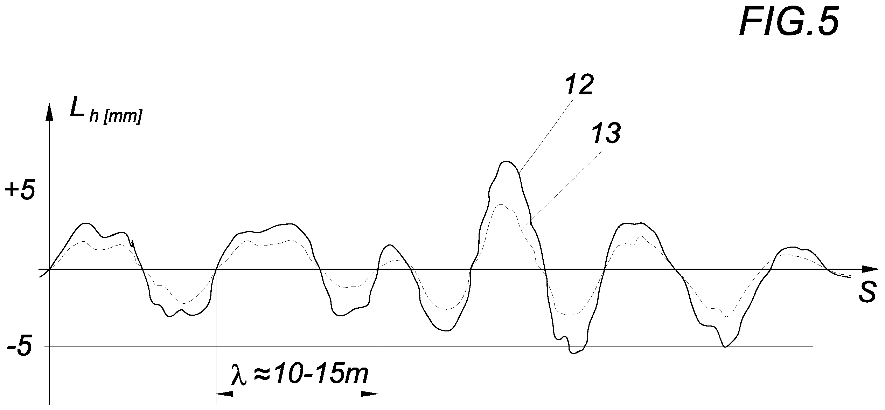

Fig. 5 zeigt den schematischen Verlauf eines Gleisfehlers Lh vor dem Stopfen 12 (durchgezogene Linie) und nach dem Stopfen 13 (strichlierte Linie). Typischerweise liegt die Fehlerwellenlänge in einem Bereich von 10-15m. Die Amplituden des Fehlers liegen je nach Streckengeschwindigkeit zwischen 2 und 5 mm. Wie dem Diagramm zu entnehmen ist bringt die Durcharbeitung mit einer Oberbaumaschine gemäß des Standes der Technik nur eine Verbesserung der Gleisfehler um ca. 30-50% bei ähnlichem Fehlerverlauf.

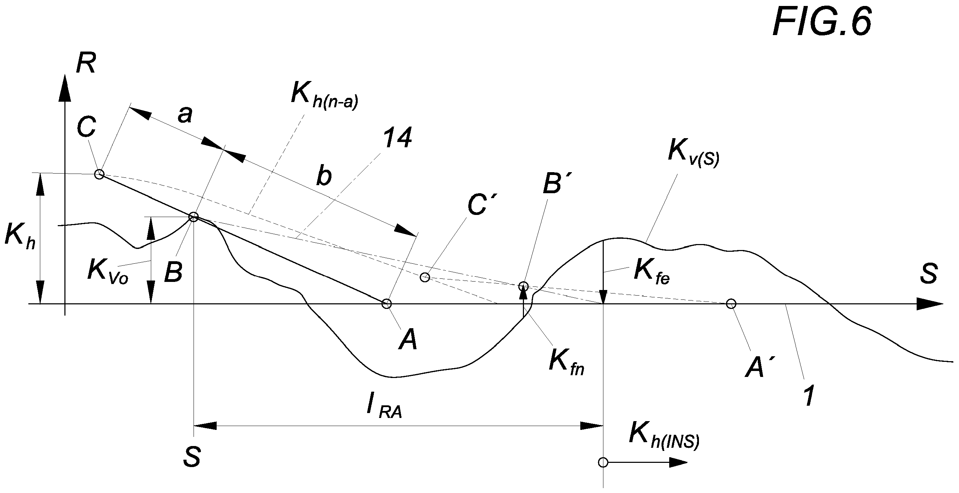

Fig. 6 stellt die Berechnung und den Verlauf einer automatischen Führung der Anfangsrampe 14 schematisch dar. Die Rampe wird dadurch gebildet, dass man vom Startpunkt S aus beim Gleisfehler $K_{v0}$ eine Gerade mit der Rampenlänge $L_{RA}$ zur Nulllinie zieht. Die Lage des hinteren Sehnendes am Messwagen C wird zum Bilden einer Anfangsrampe $I_{RA}$ automatisch aus einer Nullberichtigung bei Arbeitsbeginn S derart zur Gleissolllage 1 hingeführt, dass die notwendigen Gleiskorrekturen $K_{v(s)}$ bis zum Rampenende nach einer bestimmten Fahrtstrecke kontinuierlich aufgebaut werden. Damit die Richt- und Hebewerte langsam ansteigend beginnen und keine sprunghafte Korrektur eingeleitet wird, wird das hintere Ende der Sehne (Sehnenabschnitte a, b mit der Sehnenlänge I=a+b) am Messwagen C (virtuell) so geführt, dass die sich die am Messwagen B ermittelten Richt- und Hebewerte langsam entsprechend der eingestellten Rampe bis ansteigen. Beim Startpunkt wird der Sollwert an der Berichtigungsstelle B mit Null, also Nullberichtigung, angegeben. Damit sich bei B der Sollwert Null ergibt muss das hintere Sehnenende durch den Rechner R rechnerisch auf dem Wert $K_h$ liegen. Das hintere Sehnenende C wird bei fortschreitender Arbeit auf der Kurve $K_h(n-a)$ geführt. n ist dabei die jeweilige Position der Korrekturstelle B. Befindet sich z.B. die Sehne in der eingezeichneten Lage an den Messwagen A', B', C' dann wird der Korrekturwert $K_h(n-a)$ des hinteren Sehnenendes C' so berechnet, dass die Position des Hebe-Richtsystems B' genau auf der Rampengeraden geführt wird. Das Gleis wird durch den Wert $K_{fn}$ so berichtigt dass es auf der Rampenlinie zu liegen kommt. Am Ende der Rampe wird z.B. die Korrektur Kfe durchgeführt. Beim Weiterarbeiten wird wie beim Dreipunktverfahren vorgesehen das hintere Sehnenende C und das vordere Sehnenende A auf der Sollgleislinie (hier die Nulllinie) geführt. Nach dem Ende der Rampe wird erfindungsgemäß mit Hilfe des Inertialmesssystems INS das hintere Sehnenende Restfehlerkorrigiert ($K_{h(INS)}$) weitergeführt.

Rechnerisch ist das hintere Sehnenende C auf der folgenden Kurve zu führen:

$$K_h(n-a) = K_{V0} \cdot \frac{n}{l_{RA}} \cdot \frac{l}{b} \qquad f\ddot{u}r \quad S \leq n \leq S + l_{RA}$$

$$K_h(n-a) = 0 \quad f\ddot{u}r \quad n > S + l_{RA}$$

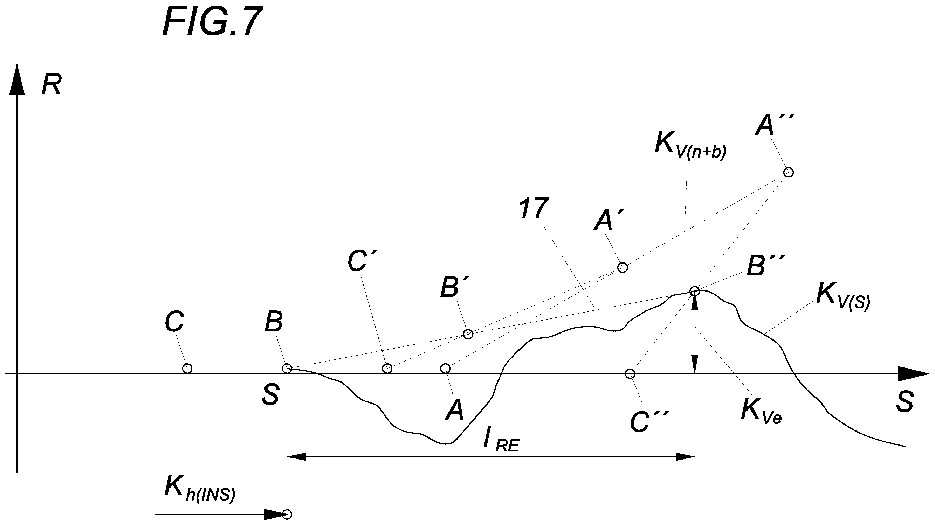

Fig. 7 stellt die Berechnung und den Verlauf der automatischen Führung der Endrampe 17 schematisch dar. Die Lage des Sehnenendes am Messwagen A wird zum Bilden einer Endrampe $I_{RE}$ derart automatisch aus der Gleissolllage 1 zu einer Nullberichtigung bei Arbeitsende geführt $K_{v(n+b)}$, dass die notwendigen Gleiskorrekturen $K_{v(s)}$ über eine bestimmte Fahrtstrecke kontinuierlich abgebaut werden. Die Rampe wird dadurch gebildet, dass man vom Startpunkt S aus von der Nullinie zum Gleisfehler $K_{vE}$ eine Gerade mit der Rampenlänge $L_{RE}$ zieht. Damit die Richt- und Hebewerte langsam abgebaut werden wird das vordere Ende A der Sehne (Sehnenabschnitte a, b mit der Sehnenlänge l=a+b) so geführt, dass die sich bei B ergebenden Richt- und Hebewerte langsam entsprechend der Rampe abnehmen. Beim Startpunkt S der Endrampe 17 befindet sich das vordere und das hintere Sehnenende auf der Nulllinie. Steht die Sehne z.B. in der Stellung an den Messwagen A', B', C' dann muss das vordere Sehnende auf der Linie $K_v(n+b)$ so liegen, dass B' auf der Rampenlinie 17 zu liegen kommt. Am Ende der Rampe (auch Arbeitsende) befindet sich B" direkt auf dem Gleisfehler $K_{vE}$, das hintere Sehnenende C" auf der Nullinie und das vordere Sehnenende A" auf der Linie $K_v(I_{RE}+b)$ und es kommt zu keinem Hebe- bzw. Richtvorgang mehr. Das Gleis wurde von der letzten exakt berichtigten Gleislage S über den Rampenverlauf 17 an den am Ende der Rampe vorliegenden Gleisfehler $K_{vE}$ kontinuierlich überführt.

Rechnerisch ist das vordere Sehnenende A auf der folgenden Kurve zu führen:

$$K_v(n+b) = K_{VE} \cdot \frac{n}{l_{Re}} \cdot \frac{l}{a} \qquad f\ddot{u}r \quad S \leq n \leq S + l_{RE}$$

$$K_v(n+b) = 0 \quad f\ddot{u}r \quad n > S + l_{RE}$$

Die Restfehlerkorrektur des hinteren Sehnenendes C durch das Inertialmesssystem INS endet beim Beginn der Rampe S, da ja sonst die gewünschte Anpassungskurve (wirkt für das Inertialmesssystem INS wie ein Restfehler) durch das Inertialmesssystem INS berichtigt werden würde.

Die gezeigten Verläufe für die Rampen sind hier schematisch für die Berichtigung der Seitenlage des Gleises ausgeführt. Für die Gleishebungen wird analog vorgegangen.

**Patentansprüche**

1. Verfahren zur Gleislageverbesserung durch eine gleisfahrbare Gleisstopfmaschine (6), die mit einem Dreipunktarbeitsmesssystem mit drei Messwagen (A, B, C) und einer dazwischen gespannten Sehne (9), mit einer Stopfeinheit (5), mit einem Hebe-Richt-Aggregat (8) für Gleise und insbesondere mit einem Odometer ausgestattet ist, wobei die Lage des Gleises nach der Berichtigungsarbeit der Gleisstopfmaschine (6) mit einem Messsystem aufgezeichnet wird, und wobei ein Rechner (R) die Differenz zwischen einer vorgegebenen Gleissolllage (1) und einer mit dem Messsystem aufgezeichneten Istlage, einen Restfehler ($K_h$), errechnet, **dadurch gekennzeichnet, dass** die Lage des hinteren Sehnenendes am hinteren Messwagen (C) der Gleisstopfmaschine (6) des Dreipunktarbeitsmesssystems fortwährend derart berichtigt wird, dass das hintere Sehnenende am Messwagen (C) auf der Gleissolllage (1) geführt wird.

2. Verfahren nach Anspruch 1, **dadurch gekennzeichnet, dass** die Lage des hinteren Sehnenendes am Messwagen (C) zum Bilden einer Anfangsrampe ($I_{RA}$) automatisch aus einer Nullberichtigung bei Arbeitsbeginn derart zur Gleissolllage (1) hin geführt wird ($K_{h(n-a)}$), dass die notwendigen Gleiskorrekturen ($K_{v(s)}$) kontinuierlich aufgebaut werden.

3. Verfahren nach Anspruch 1 oder 2, **dadurch gekennzeichnet, dass** die Lage des Sehnenendes am Messwagen (A) zum Bilden einer Endrampe ($I_{RE}$) derart automatisch aus der Gleissolllage (1) zu einer Nullberichtigung bei Arbeitsende geführt wird ($K_{v(n+b)}$), dass die notwendigen Gleiskorrekturen ($K_{v(s)}$) kontinuierlich abgebaut werden.

4. Verfahren nach einem der Ansprüche 1 bis 3, **dadurch gekennzeichnet, dass** dem Messwagen (C) ein Inertialmesssystem (INS) zugeordnet ist, das die Lage des Gleises nach der Berichtigungsarbeit der Stopfmaschine aufzeichnet.

5. Verfahren nach einem der Ansprüche 1 bis 3, **dadurch gekennzeichnet, dass** die Ermittlung der Restfehler des Gleises ($K_{h(n)}$) nach der Stopfarbeit durch Extrapolation aus den Messungen eines nachfolgenden Abnahmedreipunktmesssystems mit drei Meßwagen (C,D,E) und einer dazwischen gespannten Sehne (10) erfolgt.

**Claims**

1. Method for track position improvement using a rail tamping machine (6) which can travel on a track and is fitted with a three-point-operating measuring system having three measuring carriages (A, B, C) and a chord (9) tensioned therebetween, with a tamping unit (5), with a lifting and lining unit (8) for tracks and in particular with an odometer, wherein the position of the track is recorded by a measuring system after the track tamping machine (6) has done its correcting work, and wherein a computer (R) calculates the difference between a preset track target position (1) and an actual position recorded by the measuring system, a residual error ($K_h$), **characterised in that** the position of the rear chord end on the rear measuring carriage (C) of the track tamping machine (6) of the three-point-operating measuring system is continually corrected in such a way that the rear chord end is guided on the measuring carriage (C) at the track target position (1).

2. Method as claimed in claim 1, **characterised in that** the position of the rear chord end on the measuring carriage (C) for forming a starting slope ($I_{RA}$) is automatically guided ($K_{h(n-a)}$) out of a zero correction at the start of work to the track target position (1) in such a way that the necessary track corrections ($K_{v(s)}$) are continually built up.

3. Method as claimed in claim 1 or 2, **characterised in that** the position of the chord end on the measuring carriage (A) for forming an end slope ($I_{RE}$) is automatically guided ($K_{v(n+b)}$) out of the track target position (1) to a zero-correction at the end of work in such a way that the necessary track corrections ($K_{v(s)}$) are continually reduced.

4. Method as claimed in any one of claims 1 to 3, **characterised in that** an inertia measuring system (INS) is allocated to the measuring carriage (C), this inertia measuring system recording the position of the track after the tamping machine has done its correcting work.

5. Method as claimed in any one of claims 1 to 3, **characterised in that** the determination of the residual errors of the track ($K_{h(n)}$) after the tamping work is effected by extrapolation from the measurements of a subsequent inspection three-point measuring system with three measuring carriages (C, D, E) and a chord (10) tensioned therebetween.

**Revendications**

1. Procédé pour l'amélioration de la position des voies par une bourreuse de voies (6) mobile sur les voies qui est équipée d'un système de mesure de travaux à trois points avec trois voitures de mesure (A, B, C) et une corde (9) tendue entre elles, avec une unité de bourrage (5), avec un appareil de levage et de dressage (8) pour les voies et en particulier avec un odomètre, selon lequel la position de la voie est enregistrée avec un système de mesure après le travail de dressage de la bourreuse de voies (6) et selon lequel un calculateur (R) calcule la différence entre une position nominale de voie (1) prédéfinie et une position réelle enregistrée avec le système de mesure, dite erreur résiduelle ($K_h$), **caractérisé en ce que** la position de l'extrémité arrière de la corde sur la voiture de mesure arrière (C) de la bourreuse de voies (6) du système de mesure de travaux à trois points est rectifiée en continu de telle sorte que l'extrémité arrière de la corde sur la voiture de mesure arrière (C) est conduite sur la position nominale de voie (1).

2. Procédé selon la revendication 1, **caractérisé en ce que** la position de l'extrémité arrière de la corde sur la voiture de mesure arrière (C), pour former une rampe de début ($I_{RA}$), est conduite automatiquement à partir d'un ajustement du zéro au début des travaux jusqu'à la position nominale de voie (1) ($K_{h(n-a)}$) de telle sorte que les corrections de voie nécessaires ($K_{v(s)}$) sont exécutées en continu.

3. Procédé selon la revendication 1 ou 2, **caractérisé en ce que** la position de l'extrémité de la corde sur la voiture de mesure (A), pour former une rampe de fin ($I_{RE}$), est conduite automatiquement à partir de la position nominale de voie (1) jusqu'à un ajustement du zéro à la fin des travaux ($K_{v(n+b)}$) de telle sorte que les corrections de voie nécessaires ($K_{v(s)}$) sont arrêtées en continu.

4. Procédé selon une des revendications 1 à 3, **caractérisé en ce qu'**à la voiture de mesure (C) est associé un système de mesure inertiel (INS) qui enregistre la position de la voie après le travail de rectification de la bourreuse.

5. Procédé selon une des revendications 1 à 3, **caractérisé en ce que** la détermination de l'erreur résiduelle de la voie ($K_{h(n)}$) est réalisée après les travaux de bourrage par extrapolation des mesures d'un système de mesure à trois points de réception situé derrière avec trois voitures de mesure (C, D, E) et une corde (10) tendue entre elles.

FIG.1

*FIG.2*

FIG.3

FIG.4

FIG.5

EP 3 743 561 B1

FIG.6

EP 3 743 561 B1

FIG.7

EP 3 743 561 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0952254 A1
- WO 2008125168 A1

- DE 10337976 B4

**In der Beschreibung aufgeführte Nicht-Patentliteratur**

- **LICHTBERGER.** Bernhard: Das Handbuch Gleis. Tetzlaff Verlag, 2010